# EUROPEAN PATENT APPLICATION

(11) **EP 0 962 357 A1**
(43) Date of publication of application: **08.12.1999**
(21) Application number: 99830051.1
(22) Date of filing: 03.02.1999
(51) Int. Cl.: B60N 2/36, B60R 22/26

(54) **Motor-vehicle rear seat having a safety belt re-direct member which can be tilted to a position of reduced bulk**

(30) Priority: 02.06.1998 IT TO980476
(71) Applicant: LEAR CORPORATION ITALIA S.p.A., 10128 Torino (IT)
(72) Inventor: Spinardi, Alessandro, 10128 Torino (IT)
(74) Representative: Notaro, Giancarlo

(57) **Abstract**

A motor-vehicle rear seat comprises a re-direct member for the safety belt of central seat portion which is pivotally mounted to the frame of the backrest (3) and is biassed by spring means (12) towards an operative upright position, in which it projects above the backrest. The re-direct member (6) is rotated to a position of reduced bulk when the backrest (3) is tilted forwardly, so that the re-direct member is not of hindrance in this operation.

## Description

The present invention relates to motor-vehicle rear seats, of the type comprising a backrest which is pivotally mounted at its bottom to the motor-vehicle structure and movable between an operative upright position and a forwardly tilted position for enlarging the luggage compartment.

The object of the present invention is that of providing a rear seat of the above indicated type which is provided with a re-direct member for the safety belt which is associated with central seat portion, this re-direct member being located substantially above the backrest, so as to act as an engaging member for the safety belt, when the latter is fastened, at an intermediate location between the safety belt buckle and the safety winding device which is secured to the motor-vehicle structure behind the backrest, while ensuring that said re-direct member is not of hindrance when the backrest is tilted forwardly for enlarging the luggage compartment.

In view of achieving this object, the invention provides a motor-vehicle rear seat of the type indicated at the beginning, in which said backrest has a central seat portion with an associated safety belt, characterized in that said seat is provided with a re-direct member for the safety belt associated with the central seat portion, said re-direct member being pivotally mounted to the backrest frame and being movable between an operative upright position, in which it projects above the backrest, and a backwardly tilted position, spring means being provided for biassing said re-direct member towards the operative upright position.

Due to the above mentioned features, when the backrest is tilted forwardly, said re-direct member is not of hindrance, since it rotates backwardly thus moving away from its operative position due to its engagement against a surface located in front of the backrest. For example, in a case, known per se, in which the backrest is tilted after that the cushion of the rear seat has been rotated to a vertical position, said re-direct member comes in contact with the lower surface of the cushion as a result of the tilting of the backrest and is thus compelled to rotate to its position of reduced bulk. When the backrest is moved back to its operative position, said spring means automatically return the re-direct member to its operative position. In this operative position, any forces transmitted by the safety belt during travel of the motor-vehicle or in case of an accident, tend to push the re-direct member further towards its operative position, which is defined by stop means, so that although being pivotally mounted, the re-direct member is perfectly able to withstand the imposed stresses.

Further features and advantages of the invention will become apparent from the description which follows with reference to the annexed drawings, given purely by way of non limiting example, in which:
figure **1** is a diagrammatic side view which shows a motor-vehicle rear seat according to the invention,
figure **2** is a diagrammatic front view of a motor-vehicle rear seat according to the invention,
figure **3** is a front view at an enlarged scale of a detail of the seat according to the invention,
figure **4** is a view in cross section taken along line IV-IV of figure 3, and
figure **5** is a diagrammatic side view and at enlarged scale of a detail of the seat according to the invention with the backrest in the forwardly tilted position.

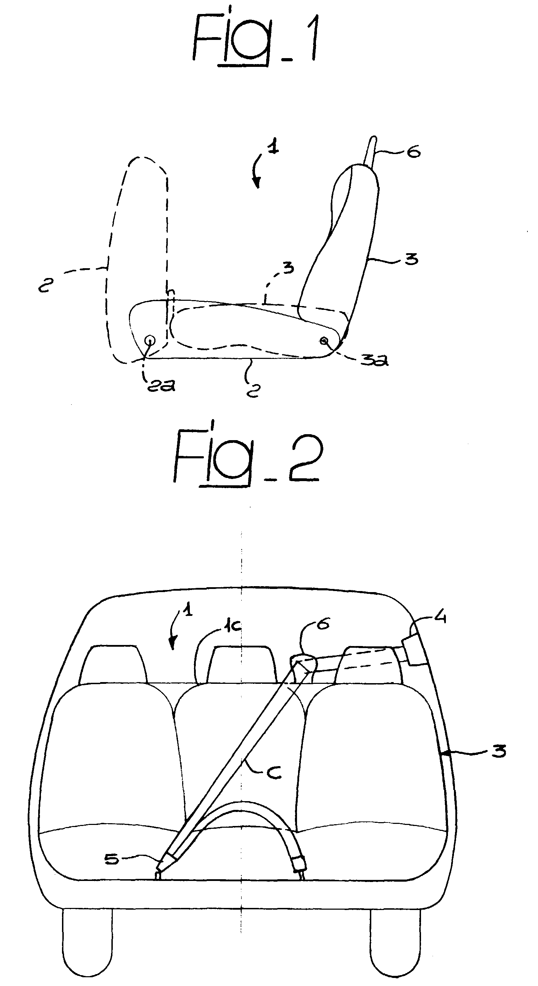

With reference to figure 1, numeral 1 generally designates a motor-vehicle rear seat comprising a cushion 2 and a backrest 3. According to a technique known per se, in order to enlarge the motor-vehicle luggage compartment, the cushion 2 can be rotated around an axis 2a located at the front of the cushion 2 so that it reaches a substantially vertical position (shown by dotted lines in figure 1). In this condition, the backrest 3 can be rotated around an articulation axis 3a so as to reach a lowered position, in which its rear surface forms an extension of the luggage compartment floor.

With reference to figure 2, seat 1 has a central seat portion 1c to which a safety belt C is associated. Safety belt C is carried by a winding device 4 which is secured to the motor-vehicle structure at the rear of the backrest 3 and has a buckle adapted to mate (figure 2 shows the safety belt in the fastened condition) with a coupling element 5 which is also secured to the motor-vehicle structure. At an intermediate location between the coupling element 5 and the winding device 4, safety belt C engages a re-direct member 6 projecting above the backrest 3.

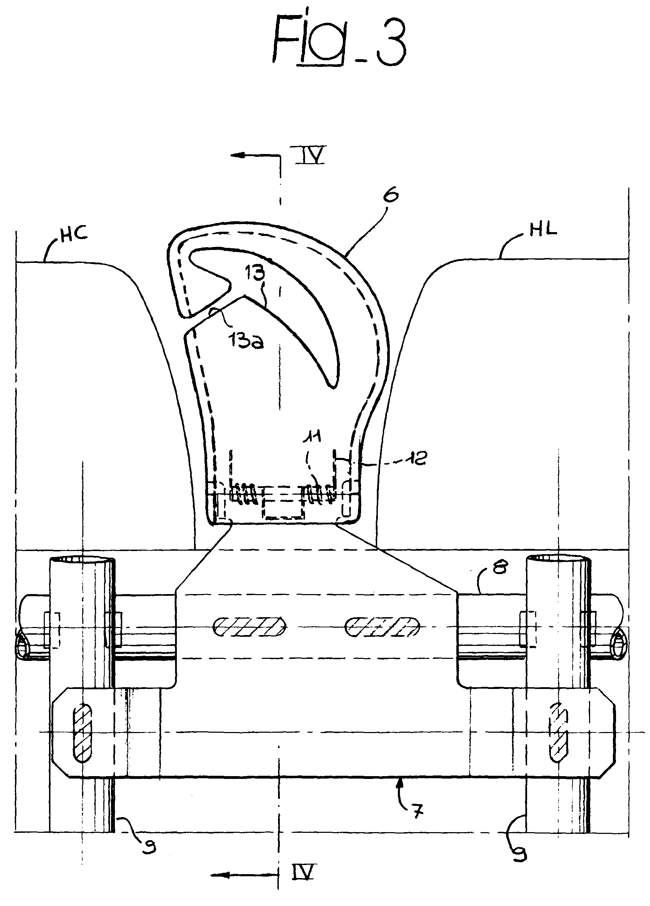

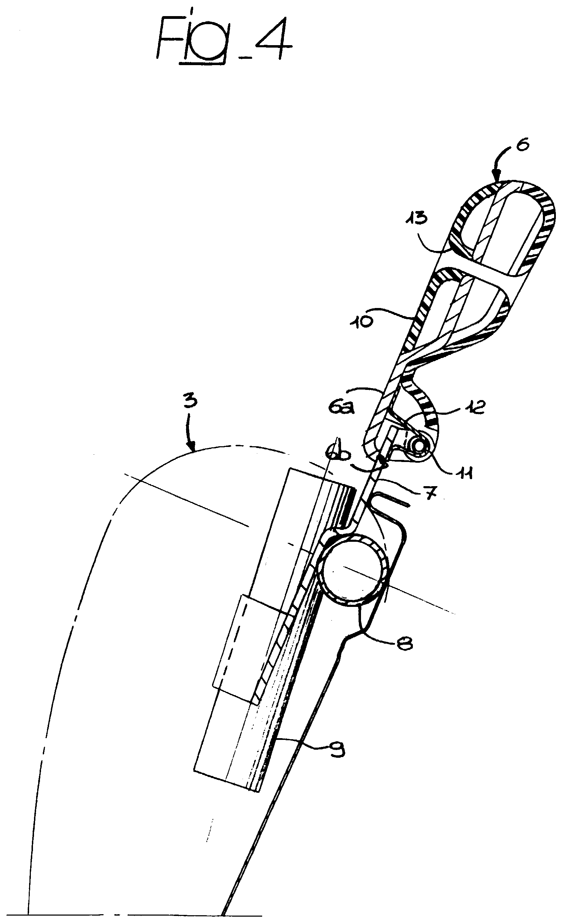

With reference to figures 3, 4, in the illustrated embodiment, the re-direct member 6 is carried by a supporting plate 7 having a shape in form of an inverted T, which is welded to a tube 8 which constitutes a peripheral element of the frame of the backrest 3, as well as to two tubes 9 which are also welded to tube 8 and are for guiding the rods (not shown) for the central headrest HC and the left hand headrest HL of the motor-vehicle rear seat. In its operative condition, the re-direct member 6 is arranged in the gap between the two headrests HC, HL and projects above the latter.

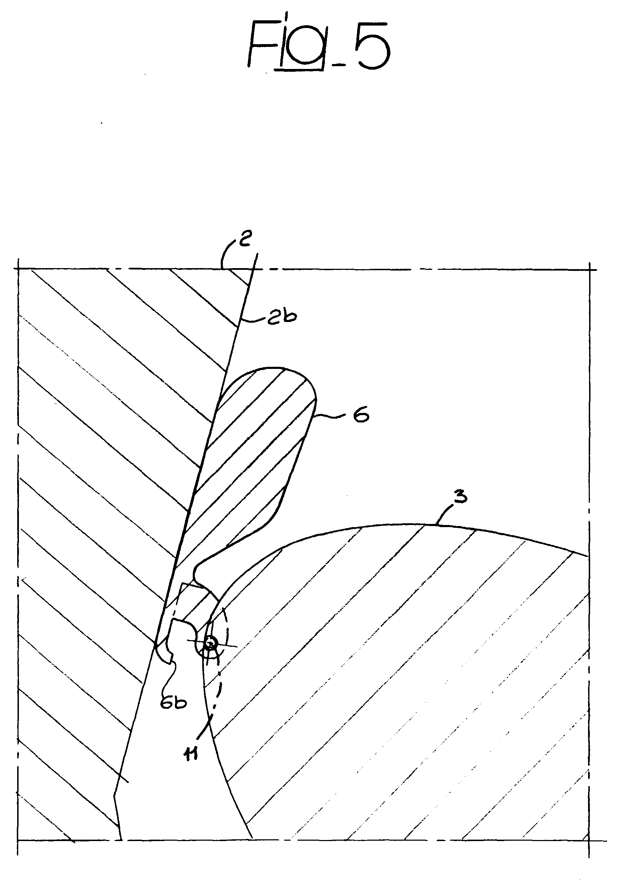

As shown in the drawings, the member comprises a sheet metal frame 6a covered by a structure of plastic material 10 and has a slot 13 opening into one side surface of the re-direct member 6 through a further slot 13a, which is to be engaged by the safety belt. The frame 6a of the re-direct member 6 is pivoted around a transverse axis 11 to the upper portion of plate 7 and is biassed by a spring 12 associated with the articulation axis 11 towards an operative upright position defined by the engagement of a stop edge 6b (see also figure 5) against the front surface of plate 7. When the safety belt is unfastened, the buckle is returned by the winding device 4 to the slot 13 of the re-direct member 6 cannot move further. The buckle can anyway be disengaged completely from slot 13 to make tilting forwardly of the backrest easier. Upon such tilting, the re-direct member 6 comes into engagement with the lower surface 2b (figure 5) of cushion 2 (which has been preliminarly rotated to the vertical position) so that it moves by itself to the rotated position of reduced bulk (figure 5), against the action of spring 12. When the backrest 3 is returned to its operative upright position, the spring 12 automatically returns the re-direct member 6 to the operative upright position.

As clearly apparent from the foregoing description, the re-direct member forming the subject of the present invention ensures proper transmission of the forces applied by the safety belt to the motor-vehicle structure while being of no hindrance to tilting forwardly of the backrest, when the luggage compartment must be enlarged.

Naturally, while the principle of the invention remains the same, the details of construction and the embodiments may widely vary with respect to what has been described and illustrated purely by way of example, without departing from the scope of the present invention.

## Claims

1. Motor-vehicle rear seat, comprising a backrest (30) which is pivotally mounted at its bottom to the motor-vehicle structure, and movable between an operative upright position and a forwardly tilted position for enlarging the luggage compartment, said backrest (3) having a central seat portion (1c), with an associated safety belt (C)
characterized in that said seat (1) is provided with a re-direct member (6) for the safety belt associated with the central seat portion, which is pivotally mounted to the frame (8) of the backrest (3) and is movable between an operative upright position, in which it projects above the backrest, and a backwardly tilted position, spring means (12) being provided for biassing the re-direct member (6) towards its upright position.

2. Rear seat according to claim 1, characterized in that when said re-direct member is in its upright position, it is located in a gap between a central headrest (HC) and a side headrest (HL) of the rear seat.

3. Rear seat according to claim 1, characterized in that said re-direct member (6) comprises a frame (6a) which is pivotally supported around a transverse axis (11) on a supporting plate (7) which is welded to the frame (8) of the seat backrest (3).

4. Rear seat according to claim 3, characterized in that said spring means are constituted by a spiral spring associated with an articulation shaft (11) of said re-direct member (6), said re-direct member (6) having a stop surface (6b) adapted to come in contact with said supporting plate (7) in the operative upright position of the re-direct member (6).
